# NEUE EUROPÄISCHE PATENTSCHRIFT

(11) **EP 1 252 813 B2**
(45) Veröffentlichungstag und Bekanntmachung des Hinweises auf die Entscheidung über den Einspruch: **13.06.2012**
(45) Hinweis auf die Patenterteilung: 14.11.2007
(21) Anmeldenummer: 02007970.3
(22) Anmeldetag: 10.04.2002
(51) Int. Cl.: A01D 89/00, A01F 15/10

(54) **Landwirtschaftliche Erntemaschine**
Agricultural harvesting machine
Machine de récolte agricole

(30) Priorität: 25.04.2001 DE 10120124
(43) Veröffentlichungstag der Anmeldung: 30.10.2002
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)
(74) Vertreter: Busse & Busse

(56) Entgegenhaltungen:
- EP-A- 0 100 628
- EP-A- 0 401 542
- EP-A1- 0 014 854
- EP-A2- 1 038 431
- EP-B1- 1 252 814
- AT-B- 308 556
- AT-B- 349 815
- DE-A- 19 750 954
- DE-A1- 2 929 592
- DE-A1- 4 120 441
- DE-A1- 4 127 155
- DE-U- 1 793 975
- US-A- 2 430 734
- US-A- 2 524 233
- US-A- 2 682 743
- US-A- 2 872 772
- US-A- 3 098 340
- US-A- 3 815 346
- US-A- 3 924 391
- US-A- 4 304 090
- US-A- 4 411 127
- US-A- 4 516 389
- Agrartechnik Dezember 1999, Seite 10, Abbildung "Pöttinger Ladewagen - JUMPO Profiline" (links unten)

## Beschreibung

Die Erfindung bezieht sich auf eine landwirtschaftliche Erntemaschine mit einer Aufnahmeeinrichtung zur Aufnahme von auf einer Feld- und Wiesenfläche liegendem Erntegut mit einer mit Förderzinken besetzten Aufnahmetrommel und einer sich in Flussrichtung des Erntegutes daran anschließenden Förder- und/oder Schneideinrichtung sowie einem vor und/oder über der Aufnahmetrommel angebrachten, drehbar an freien Enden von einseitig schwenkbar an Seitenteilen der Emtemaschine gehalterten Tragarmen gelagerten, walzenförmig ausgebildeten Niederhalter für das Erntegut, und einem zwischen dem Niederhalter und der Förder- und/oder Schneideinrichtung vorgesehenen, den Erntegutstrom nach oben begrenzenden Leitorgan.

Aus der US 4 015 410 A ist eine Niederhaltereinrichtung bekannt, welche aus einer drehbaren Walze gebildet ist, die an um eine horizontale und quer zur Fahrtrichtung ausgerichteten Achse schwenkbaren Tragarmen gelagert ist. Die Walze der Niederhaltereinrichtung ist in Bezug zur Aufnahmetrommel so angeordnet, dass sie vor der Aufnahmetrommel auf das aufzunehmende Schwad drückt und ein flaches Schwad formt, welches dann von der Aufnahmetrommel aufgenommen werden kann. Da das Leitorgan fest und unverschwenklich an der Erntemaschine gehaltert ist, bildet das Leitorgan lediglich für sehr große Schwade aus Erntegut eine obere Begrenzung, so dass sich das Schwad im Bereich zwischen der Walze und der nachfolgenden Förder- und/oder Schneideinrichtungen wieder ausdehnen kann mit der negativen Folge, dass es dort zu Verstopfungen im Erntegutfluss kommt und eine störungsfreie Zuführung des Erntegutes zu den nachfolgenden Förder- und/oder Schneideinrichtungen nicht sichergestellt ist.

Die EP 0 401 542 A1 offenbart einen Aufsammler für eine Erntemaschine mit einer Aufsammeltrommel, einer Förderschnecke und einem Niederhalter, wobei zwischen dem Wirkungsbereich des Niederhalters und dem Umkreis der Förderschnecke ein walzenförmiges drehbares Leitorgan zur Ablenkung des Gutstromes vorgesehen ist. Der Niederhalter ist als Niederhaltertrommel ausgebildet, der sich nur unzulänglich an unterschiedliche Schwadgrößen und Schwadhöhen anpassen lässt.

Es ist Aufgabe der vorliegenden Erfindung, eine landwirtschaftliche Erntemaschine mit einer mit einem Niederhalter versehenen Aufnahmeeinrichtung derart weiterzubilden, dass sowohl bei der Aufnahme von Erntegutschwaden von der Feld- und Wiesenfläche als auch bei der Zuführung des Erntegutes zu nachfolgenden Förder- und/oder Schneideinrichtungen Störungen im Erntegutfluss sicher vermieden werden und damit eine optimale Leistungsfähigkeit der landwirtschaftlichen Emtemaschine gewährleistet ist.

Zur Lösung der gestellten Aufgabe zeichnet sich die landwirtschaftliche Emtemaschine der vorstehend genannten Art zunächst durch die im Patentanspruch 1 angegebenen Merkmale aus. Eine weitere Lösung der gestellten Aufgabe ist im Patentanspruch 3 angegeben. Vorteilhafte Ausgestaltungen der Erfindung ergeben sich aus den Unteransprüchen.

Durch die Verwendung der erfindungsgemäßen Merkmale wird eine landwirtschaftliche Erntemaschine geschaffen, deren Aufnahmeeinrichtung sich in optimaler Weise zur Aufnahme von auf einer Feld- und Wiesenfläche liegenden Erntegutschwaden eignet. Eine als Aufnahmetrommel ausgebildete und mit Förderzinken versehene Aufnahmeeinrichtung ist dazu mit einem walzenförmig ausgebildeten Niederhalter versehen, an dem sich in Flußrichtung des Erntegutes ein den Gutstrom nach oben begrenzendes Leitorgan anschließt, welches relativ zum Niederhalter bewegbar angelenkt ist. Gemäß der Erfindung ist es dabei vorgesehen, daß der als Walze ausgeführte Niederhalter an um eine in etwa horizontal und quer zur Fahrt- und Arbeitsrichtung der landwirtschaftlichen Erntemaschine ausgerichtete Achse schwenkbar an Seitenteilen der Aufnahmetrommel angelenkten Tragarmen gelagert und in einem Bereich vor und/oder oberhalb von der Aufnahmetrommel angeordnet ist. In dem Bereich zwischen dem walzenförmigen Niederhalter und nachfolgenden Förder- und/oder Schneideinrichtungen ist ein den Erntegutstrom nach oben begrenzendes Leitorgan vorgesehen, welches um eine in etwa horizontale und quer zur Fahrt- und Arbeitsrichtung ausgerichtete Achse schwenkbar an den Tragarmen des Niederhalters gehaltert ist. Daraus ergibt sich, daß das Leitorgan bei der Anpassung an unterschiedliche Schwadhöhen bzw. Schwadstärken relativ zum Niederhalter verschwenkbar ist und somit eine stetige und störungsfreie Zuführung des aufgenommenen Erntegutschwades an die folgenden Förder- und/oder Schneideinrichtungen erreichbar ist.

Nach der Erfindung kann zwischen zwei verschiedenen Ausführungsformen unterschieden werden. Bei einer ersten Ausführungsform ist es vorgesehen, daß das Leitorgan in einem vorgegebenen Schwenkbereich um die in etwa horizontal und quer zur Fahrt- und Arbeitsrichtung ausgerichtete Achse in Bezug zum Niederhalter frei verschwenkbar ist. Das bedeutet, daß unabhängig von der durch das Erntegutschwad vor der Aufnahmetrommel vorgegebenen Höhe des Niederhalters eine Schwenkbewegung des Leitorganes und somit eine exakte Anpassung beispielsweise an unregelmäßig geformte Erntegutschwaden möglich ist. Der vorgegebene Schwenkbereich des Leitorganes kann beispielsweise durch eine Lasche begrenzt sein, die einen unteren und einen oberen Endanschlag aufweist und mit einem Kopfelement einer Schraubverbindung zusammenwirkt. Bei einer zweiten Ausführungsform kann es vorgesehen sein, daß in Abhängigkeit von der durch das Erntegutschwad vor der Aufnahmetrommel vorgegebenen Höhe des Niederhalters die Schwenkbewegung des Leitorganes steuerbar ist. Hierzu kann eine Lenkeranordnung dienen, welche sich beispielsweise zwischen dem Leitorgan und Seitenteilen der Aufnahmetrommel erstreckt.

In einer konstruktiv einfachen und kostengünstig herstellbaren Ausführungsform ist das sich in Flußrichtung des Erntegutes an einen als frei drehbare oder angetriebene Walze ausgebildeten Niederhalter anschließende Leitorgan als ein aus Zinken gebildetes Stabgitter ausgeführt, bei dem die Zinken einenends in einem Querträger gehaltert sind. Zur Verbesserung der Führungseigenschaften des Leitorganes bei kurzstengeligem Erntegut kann in einem vorderen, an den Querträger angrenzenden Bereich ein geschlossenes Prallblech vorgesehen sein.

Eine detaillierte Beschreibung des Gegenstandes der Erfindung erfolgt nun anhand von Ausführungsbeispielen. In der Zeichnung stellt im einzelnen dar:
- Fig.1:: eine Seitenansicht einer landwirtschaftlichen Erntemaschine mit einer erfindungsgemäßen Aufnahmeeinrichtung;
- Fig.2:: eine vergrößerte Seitenansicht der Aufnahmeeinrichtung gemäß Einzelheit X in Fig.1, wobei sich der Niederhalter in einer unteren Stellung befindet;
- Fig.3:: eine Ansicht ähnlich Fig.2, wobei sich der Niederhalter in einer durch ein Erntegutschwad angehobenen Stellung befindet;
- Fig.4:: eine Seitenansicht einer Aufnahmeeinrichtung ähnlich Fig.2 in einer zweiten Ausführungsform, wobei sich der Niederhalter in einer unteren Stellung befindet;
- Fig.5:: eine Ansicht ähnlich Fig.4, wobei sich der Niederhalter in einer durch ein Erntegutschwad angehobenen Stellung befindet;
- Fig.6:: eine Ansicht von einer Längsseite der Erntemaschine auf ein erfindungsgemäßes Leitorgan der Aufnahmeeinrichtung nach Fig. 1 bis 3;
- Fig.7:: eine Draufsicht auf das in Fig.6 dargestellte Leitorgan;

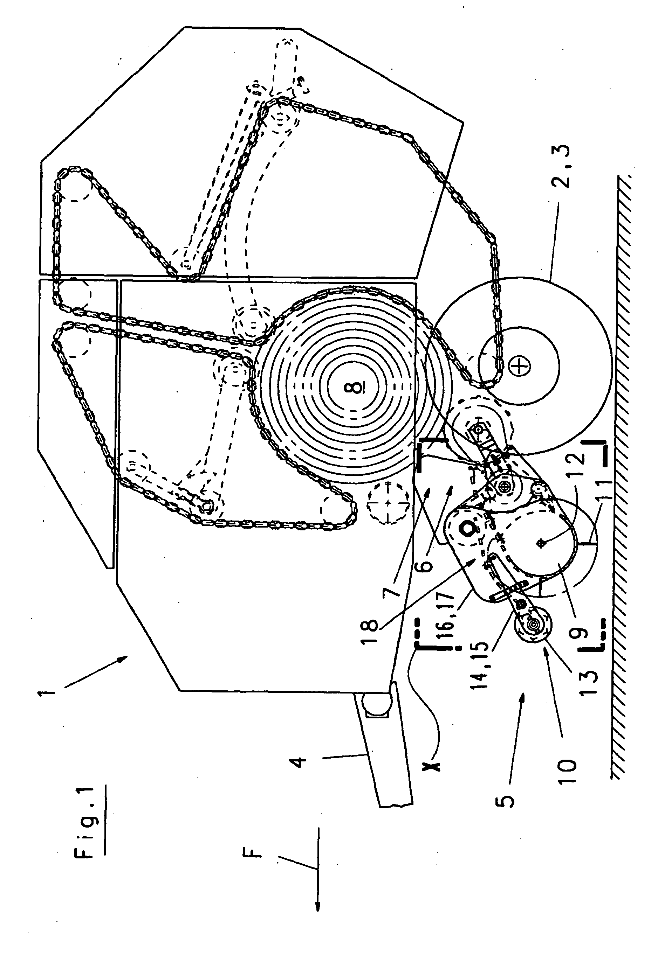

Eine Ausführungsform einer landwirtschaftlichen Erntemaschine 1 ist in Fig. 1 in der Form einer landwirtschaftlichen Rundballenpresse zum Aufnehmen und Pressen von Heu, Stroh, angewelktem Gras oder dgl. landwirtschaftlichen Erntegut zu zylindrischen Ballen wiedergegeben. Die Rundballenpresse stützt sich über Laufräder 2,3 gegenüber dem Erdboden ab und kann mittels einer Deichsel 4 an einen nicht dargestellten, landwirtschaftlichen Ackerschlepper oder dgl. Zugmaschine angehängt werden. Der Antrieb der Rundballenpresse erfolgt über eine ebenfalls nicht dargestellte Gelenkwellenverbindung, die antriebsmäßig mit dem Ackerschlepper zu koppeln ist. Die Rundballenpresse beinhaltet im wesentlichen eine Aufnahmeeinrichtung 5 sowie eine dieser nachgeschalteten Förder- und/oder Schneideinrichtung 6 und einen eine Gutzuführöffnung 7 beinhaltenden und von Wickelelementen umfangseitig begrenzten Wickelraum 8 zur Formung von zylindrischen Ballen mit unterschiedlichen Ballendurchmessern. Der Erfindung können aber ebenso landwirtschaftliche Erntemaschinen in Form von Ballenpressen zur Herstellung von Rechteckballen, Ladewagen oder Feldhäcksler zugrunde gelegt werden.

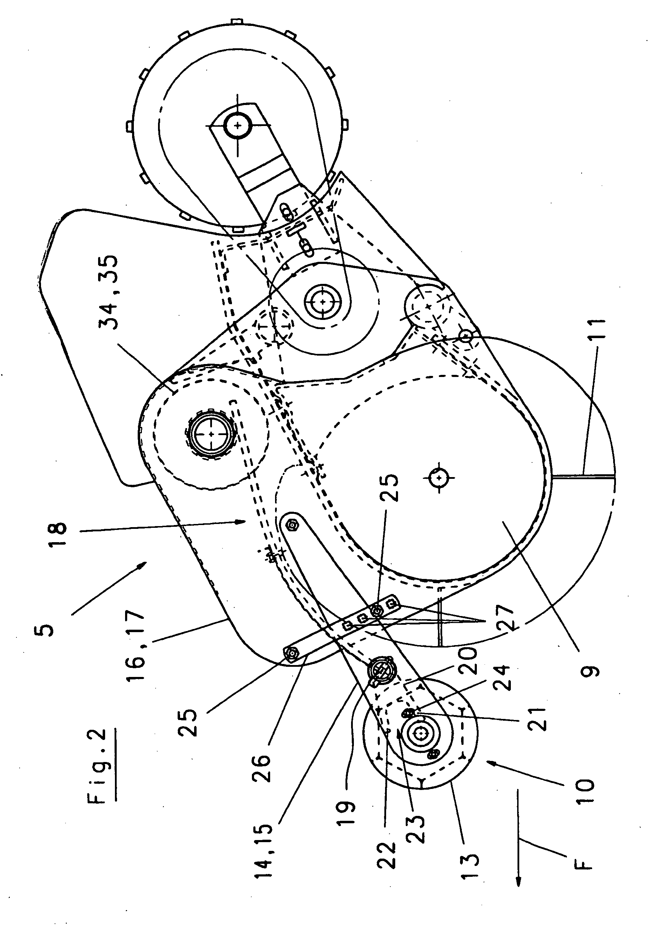

Wie weiterhin aus der Fig.1 zu entnehmen ist, umfaßt die Aufnahmeeinrichtung 5 eine Aufnahmetrommel 9, der ein Niederhalter 10 zugeordnet ist. Zur Aufnahme des Erntegutes von der Feld- und Wiesenfläche ist die Aufnahmetrommel mit Förderzinken 11 bestückt, welche um eine Drehachse 12 der Aufnahmetrommel 9 rotierend antreibbar sind. In einem Bereich vor und/oder über der Aufnahmetrommel 10 befindet sich ein als Walze 13 ausgebildeter und frei drehbar an Tragarmen 14,15 gelagerter Niederhalter 10, dessen Tragarme 14,15 schwenkbeweglich an Seitenteilen 16,17 der Aufnahmetrommel 9 gehaltert sind. In dem Bereich zwischen dem Niederhalter 10 und der in Flußrichtung des Erntegutes nachfolgenden Förder- und/oder Schneideinrichtung 6 ist ein den Erntegutstrom nach oben begrenzendes Leitorgan 18 vorgesehen, welches in den Fig. 2 bis 5 in einer vergrößerten Darstellung näher veranschaulicht ist.

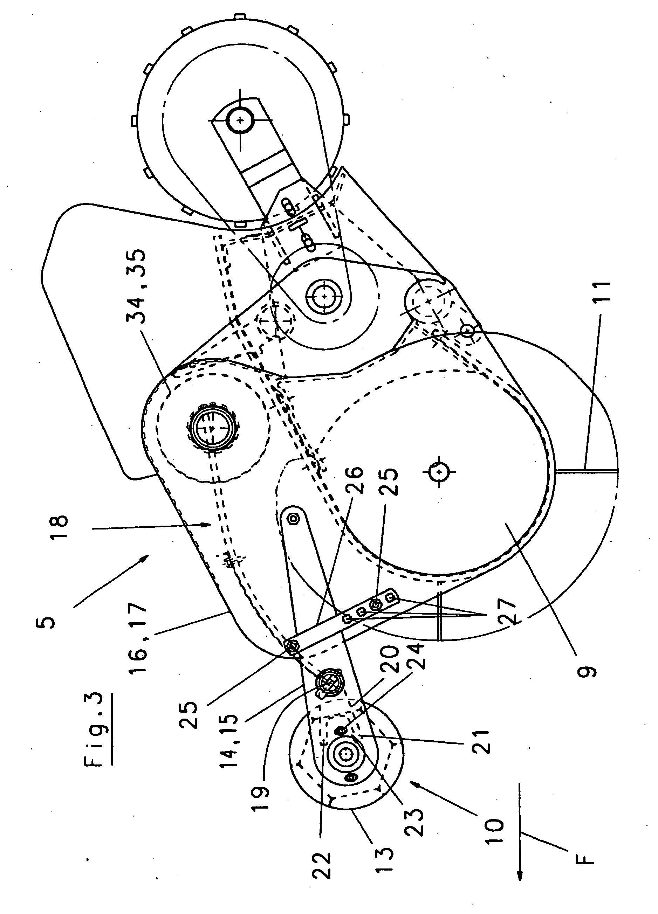

In Fig. 2 und 3 wird eine erste Ausführungsform einer Aufnahmeeinrichtung 5 gezeigt, bei der das Leitorgan 18 in einem vorgegebenen Schwenkbereich um eine in etwa horizontal und quer zur Fahrt- und Arbeitsrichtung F ausgerichtete Achse 19 in Bezug zum Niederhalter 10 frei verschwenkbar in Bohrungen der Tragarme 14,15 gelagert ist. Zur Begrenzung des Schwenkbereiches des Leitorganes 18 ist diesem eine Lasche 20 zugeordnet, zwischen dessen Endanschlägen 21,22 eine Freiraum 23 ausgebildet ist. Wie in den Fig. 2 und 3 veranschaulicht, befindet sich in diesem Freiraum 23 der Lasche 20 ein Kopfelement einer Befestigungsschraube 24, so daß nach einer Schwenkbewegung des Leitorganes 18 bei Anlage der Endanschläge 21,22 an dem Kopfelement der Befestigungsschraube 24 die Grenzen des Schwenkbereiches des Leitorganes 18 erreicht sind. Zur Höheneinstellung des Niederhalters 10 und zur Begrenzung des Schwenkweges während des praktischen Einsatzes ist an den Seitenteilen 16,17 der Aufnahmetrommel 9 über Schraubverbindungen 25 in einem Abstand zu den Seitenteilen 16,17 eine Lasche 26 angebracht, so daß die Tragarme 14,15 zwischen den Seitenteilen 16,17 und der Lasche 26 geführt werden. Zur Veränderung der Höheneinstellung des Niederhalters 10 kann die untere Schraubverbindung 25 in einer der Bohrungen 27 eingesetzt sein. Wie weiterhin aus den Fig. 2 und 3 hervorgeht, ist die Anordnung des Leitorganes 18 in Bezug zum Niederhalter 10 so ausgeführt, daß der vordere Bereich des Leitorganes 18 keine Staukante für den Erntegutstrom darstellt. In der gezeigten Ausführungsform liegen beispielsweise die Achse 19 des Leitorganes 18, die Drehachse der Walze 13 des Niederhalters 10 und die Schwenkachse der Tragarme 14,15 in einer gemeinsamen Ebene. Diese konstruktiven Merkmale hängen jedoch stark von der Baugröße der Walze 13 und des Leitorganes 18 ab, so daß hierbei sich durchaus auch andere Ausführungsformen als vorteilhaft erweisen können.

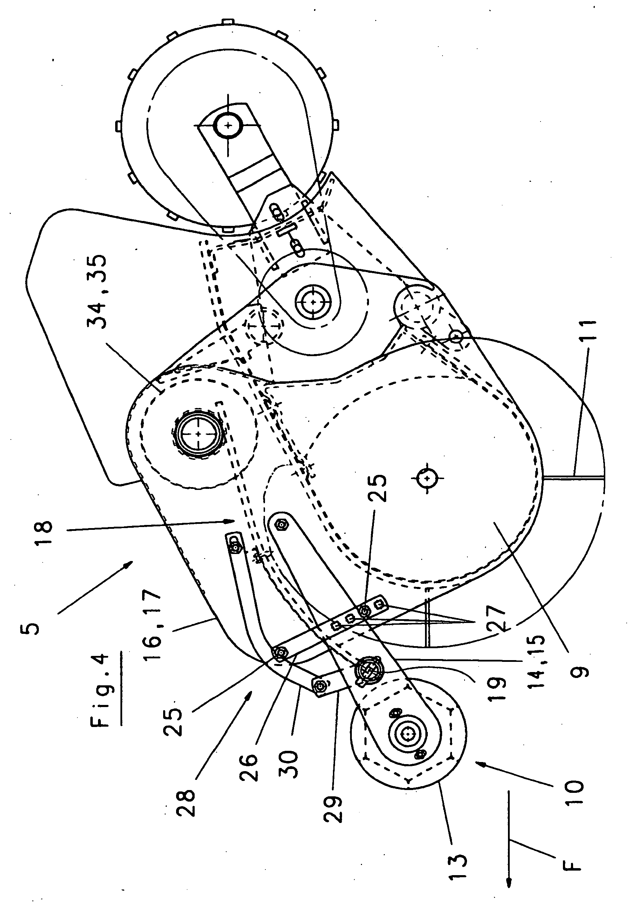

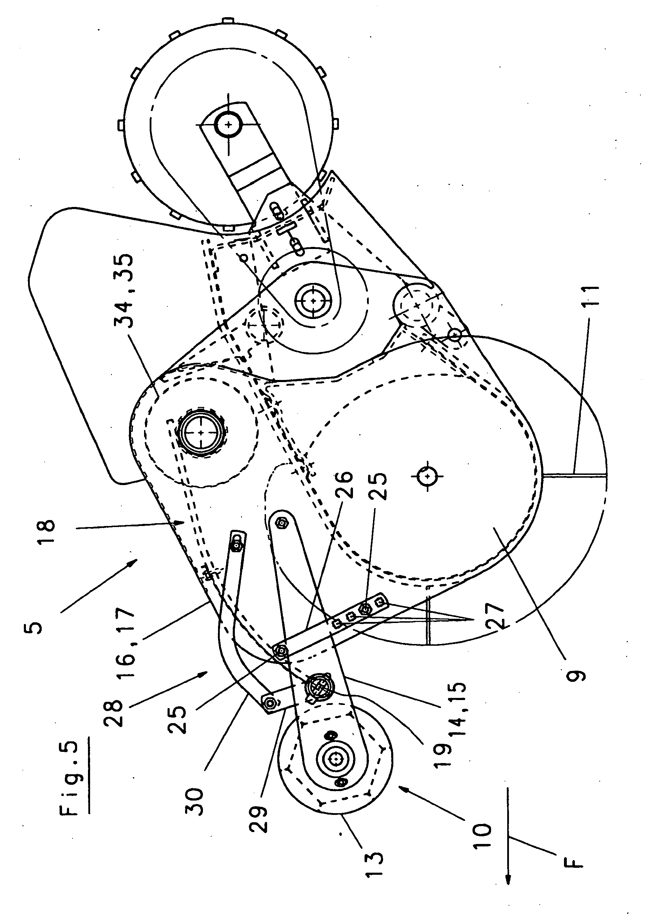

In den Fig. 4 und 5 ist eine zweite Ausführungsform der Aufnahmeeinrichtung dargestellt, bei der die Schwenkbewegung des Leitorganes 18 in Abhängigkeit von der durch das Erntegutschwad vorgegebenen Höhe des Niederhalters 10 steuerbar ist. Zur Steuerung des Leitorganes 18 ist hierbei eine Lenkeranordnung 28 vorgesehen, welche die Form eines kinematischen Gelenkvierecks aufweist und aus einem der Tragarme 14,15 der Walze 13, eine dem Leitorgan 18 zugeordnete Lasche 29 sowie aus einem Lenker 30 gebildet ist, der sich an einer der Seitenteile 16,17 der Aufnahmetrommel 9 abstützt.

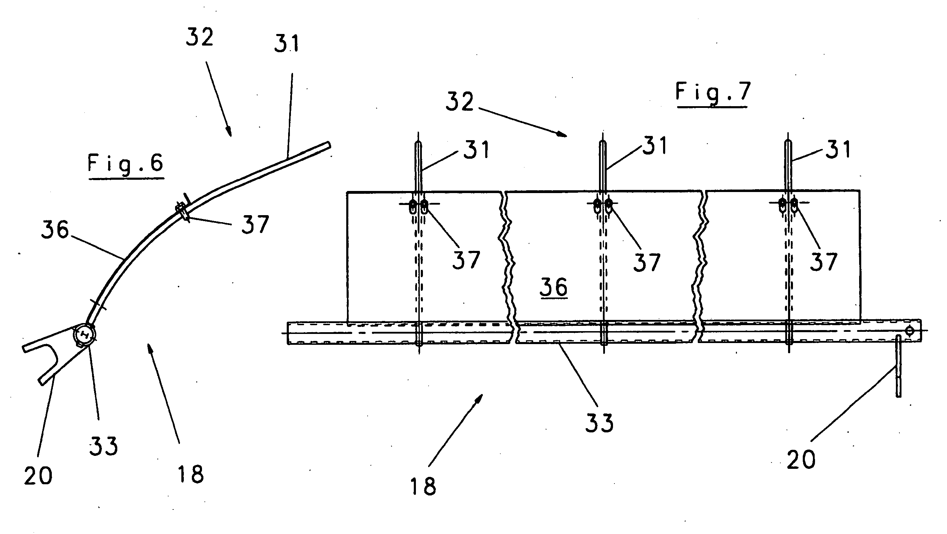

In einer konstruktiv einfachen und kostengünstig herstellbaren Ausführungsform gemäß Fig. 6 und 7 kann das sich in Flußrichtung des Erntegutes an einen als frei drehbare oder angetriebene Walze 13 ausgebildeten Niederhalter 10 anschließende Leitorgan 18 als ein aus Zinken 31 gebildetes Stabgitter 32 ausgeführt sein, bei dem die Zinken 31 einenends in einem Querträger 33 gehaltert sind. Die Zinken 31 des Stabgitters 32 können sich dabei über die gesamte Breite der Aufnahmetrommel 9 erstrecken, erstrecken sich aber, wie in den Fig. 2 bis 5 wiedergegeben, über einen Bereich, welcher zwischen zwei die Breite eines Erntegutschwades verringernden Einführschnecken 34,35 zur Zuführung des Erntegutes vorgesehen ist.

Zur Verbesserung der Führungseigenschaften des Leitorganes bei kurzstengeligem Erntegut kann in einem vorderen, an den Querträger 33 angrenzenden Bereich ein geschlossenes Prallblech 36 vorgesehen sein, das zur Befestigung an dem Stabgitter 32 des Leitorganes 18 beispielsweise einenends mit Bohrungen versehen ist und auf die Zinken 31 aufgeschoben werden kann, während anderenends zur Arretierung Klemmbügel 37 angebracht sind.

Obwohl in der Beschreibung und in den dazugehörigen Zeichnungen bereits vorteilhafte Ausführungen beschrieben wurden, so sind im Rahmen der Erfindung durchaus weitere Modifikationen vorstellbar. So ist es beispielsweise vorstellbar, bei der Ausführungsform nach Fig. 2 und 3 die Andruck- bzw. Führungskraft des Leitorganes 18, die von oben auf das Erntegut einwirkt, über geeignete Federelemente, wie Zug- oder Druckfedern veränderbar auszubilden.

## Patentansprüche

1. Landwirtschaftliche Erntemaschine mit einer Aufnahmeeinrichtung (5) zur Aufnahme von auf einer Feld- und Wiesenfläche liegendem Erntegut mit einer mit Förderzinken (11) besetzten Aufnahmetrommel (9) und einer sich in Flussrichtung des Erntegutes daran anschließenden Förder- und/oder Schneideinrichtung sowie einem vor und/oder über der Aufnahmetrommel (9) angebrachten, drehbar an freien Enden von einseitig schwenkbar an Seitenteilen der Erntemaschine gehalterten Tragarmen (14, 15) gelagerten, walzenförmig ausgebildeten Niederhalter (10) für das Erntegut, und einem zwischen dem Niederhalter (10) und der Förder- und/oder Schneideinrichtung vorgesehenen, den Erntegutstrom nach oben begrenzenden Leitorgan (18), **dadurch gekennzeichnet, dass** das Leitorgan (18) um eine in etwa horizontale und quer zur Fahrt- und Arbeitsrichtung (F) ausgerichtete Achse (19) relativ zum Niederhalter (10) bewegbar angebracht ist und dass das Leitorgan (18) um die in etwa horizontale und quer zur Fahrt- und Arbeitsrichtung (F) ausgerichtete Achse (19) in einem vorgegebenen, begrenzten Schwenkbereich frei bewegbar ist, wobei das Leitorgan (18) aus einem aus Zinken (31) gebildeten Stabgitter (32) besteht und die Zinken (31) einenends an einem Querträger (33) befestigt sind, wobei Zinken (31) des Leitorgans (18) einen Bereich übergreifen, der zwischen Einführschnecken (34, 35) zur Verringerung der Breite des aufgenommenen Erntegutschwades liegt und zur Zuführung des Erntegutes zur Gutzuführöffnung (7) dient.

2. Landwirtschaftliche Erntemaschine nach Anspruch 1, **dadurch gekennzeichnet, dass** der Schwenkbereich des Leitorgans (18) durch eine Lasche (20) mit Endanschlägen (21, 22) begrenzt ist, welche sich an einem Kopfelement einer Befestigungsschraube (24) abstützt.

3. Landwirtschaftliche Erntemaschine mit einer Aufnahmeeinrichtung (5) zur Aufnahme von auf einer Feld- und Wiesenfläche liegendem Erntegut mit einer mit Förderzinken (11) besetzten Aufnahmetrommel (9) und einer sich in Flussrichtung des Erntegutes daran anschließenden Förder- und/oder Schneideinrichtung sowie einem vor und/oder über der Aufnahmetrommel (9) angebrachten, drehbar an freien Enden von einseitig schwenkbar an Seitenteilen der Erntemaschine gehalterten Tragarmen (14, 15) gelagerten, walzenförmig ausgebildeten Niederhalter (10) für das Erntegut, und einem zwischen dem Niederhalter (10) und der Förder- und/oder Schneideinrichtung vorgesehenen, den Erntegutstrom nach oben begrenzenden Leitorgan (18), **dadurch gekennzeichnet, dass** das Leitorgan (18) relativ zum Niederhalter (10) bewegbar angelenkt ist, wobei das Leitorgan (18) in Abhängigkeit von der Schwenkbewegung des Niederhalters (10) gegenüber der Aufnahmetrommel (9) verschwenkbar ist und die Schwenkbewegung des Leitorgans (18) durch eine an Seitenteilen (16, 17) der Aufnahmetrommel (9) sich abstützende Lenkeranordnung (28) steuerbar ist.

4. Landwirtschaftliche Erntemaschine nach einem der Ansprüche 1 bis 3, **dadurch gekennzeichnet, dass** der Niederhalter (10) als eine frei drehbare oder angetriebene Walze (13) ausgebildet ist.

5. Landwirtschaftliche Erntemaschine nach einem der Ansprüche 1 bis 4, **dadurch gekennzeichnet, dass** das als Stabgitter (32) ausgeführte Leitorgan (18) in seinem vorderen, an den Querträger (33) angrenzenden Bereich mit einem geschlossenen Prallblech (36) versehen ist.

6. Landwirtschaftliche Erntemachine nach einem der Ansprüche 3 bis 5, **dadurch gekennzeichnet, dass** die Lenkeranordnung (28) die Form eines kinematischen Gelenkvierecks aufweist.

7. Landwirtschaftliche Erntemaschine nach Anspruch 6, **dadurch gekennzeichnet, dass** die als Gelenkviereck ausgebildete Lenkeranordnung (28) aus einem der Tragarme (14, 15), der Walze (13), einer dem Leitorgan (18) zugeordneten Lasche (29) sowie aus einem Lenker (30) gebildet ist, der sich an einer der Seitenteile (16, 17) der Aufnahmetrommel (9) abstützt.

## Claims

1. Agricultural harvester having a pick-up arrangement (5) for picking up crops for harvesting lying on the surface of fields or meadows, having a pick-up drum (9) fitted with feeding tines (11), having a feeding and/or cutting arrangement which follows on from the latter in the direction of flow of the crop for harvesting, having a hold-down means (10) in roller form for the crop for harvesting which is fitted in front of and/or above the pick-up drum (9) and which is rotatably mounted at free ends of carrier arms (14, 15) which, at one end, are mounted to be pivotable on side-parts of the harvester, and having a directing member (18) which is provided between the hold-down means (10) and the feeding and/or cutting arrangement and which forms an upper boundary for the flow of the crop for harvesting, **characterised in that** the directing member (18) is mounted to be movable relative to the hold-down means (10) about an approximately horizontal axis (19) oriented transversely to the direction of travel and operation (F), and **in that** the directing member (18) is freely movable about the approximately horizontal axis (19) oriented transversely to the direction of travel and operation (F) within a preset, limited, range of pivot, the directing member (18) comprising a grille (32) formed by tines (31) and the tines (31) being fastened at one end to a transverse support (33), tines (31) of the directing member (18) fitting over a region which is situated between infeed augers (34, 35) for reducing the width of the swath of crop for harvesting which is picked up and for feeding the crop for harvesting to the crop infeed opening (7).

2. Agricultural harvester according to claim 1, **characterised in that** the range of pivot of the directing member (18) is limited by a bar (20) having end stops (21, 22), which is supported on a head member of a fixing bolt (24).

3. Agricultural harvester having a pick-up arrangement (5) for picking up crops for harvesting lying on the surface of fields or meadows, having a pick-up drum (9) fitted with feeding tines (11), having a feeding and/or cutting arrangement which follows on from the latter in the direction of flow of the crop for harvesting, having a hold-down means (10) in roller form for the crops for harvesting which is fitted in front of and/or above the pick-up drum (9) and which is rotatably mounted at free ends of carrier arms (14, 15) which, at one end, are mounted to be pivotable on side-parts of the harvester, and having a directing member (18) which is provided between the hold-down means (10) and the feeding and/or cutting arrangement and which forms an upper boundary for the flow of the crop for harvesting, **characterised in that** the directing member (18) is hinged to be movable relative to the hold-down means (10), the directing member (18) being pivotable relative to the pick-up drum (9) as a function of the pivoting movement of the hold-down means (10), and the pivoting movement of the directing member (18) being controllable by a link arrangement (28) which is supported on side-parts (16, 17) of the pick-up drum (9).

4. Agricultural harvester according to one of claims 1 to 3, **characterised in that** the hold-down means (10) takes the form of a freely rotatable or driven roller (13).

5. Agricultural harvester according to one of claims 1 to 4, **characterised in that** the directing member (18) which in the form of a grille (32) is provided with a solid impact plate (36) in its front region adjoining the transverse support (33).

6. Agricultural harvester according to one of claims 3 to 5, **characterised in that** the link arrangement (28) takes the form of a kinematic four-bar linkage.

7. Agricultural harvester according to claim 6, **characterised in that** the link arrangement (28) which takes the form of a four-bar linkage is formed by one of the carrier arms (14, 15), the roller (13), a bar (29) associated with the directing member (18) and a link (30) which is supported on one of the side-parts (16, 17) of the pick-up drum (9).

## Revendications

1. Machine de récolte agricole comportant un ramasseur (5) pour prendre les produits de récolte déposés sur le champ ou le pré, comportant un tambour de ramassage (9) garni de dents de transfert (11) suivi d'une installation de transfert et/ou de coupe en aval dans le sens de passage des produits, ainsi qu'un tasse-foin (10) pour les produits, ce tasse-foin installé devant et/ou au-dessus du tambour de ramassage (9), monté à rotation aux extrémités libres de bras de support (14, 15) reliés par un côté, en pivotement, sur les parties latérales de la machine, ce tasse-foin ayant une forme de rouleau, et un organe de guidage (18) placé entre le tasse-foin (10) et l'installation de transfert et/ou de coupe, pour délimiter le flux de produits vers le haut,
**caractérisée en ce que**
l'organe de guidage (18) est mobile autour d'un axe (19) sensiblement horizontal aligné transversalement à la direction de déplacement et de travail (F), cet organe de guidage étant mobile par rapport au tasse-foin (10) et l'organe de guidage (18) peut bouger librement dans une plage de pivotement prescrite limitée autour de l'axe (19) sensiblement horizontal, transversal à la direction de déplacement et de travail (F), dans lequel l'organe de guidage (18) est formé par une grille de tiges (32) constituée de dents (31) et les dents (31) sont fixées par une extrémité à une traverse (33), dans lequel les dents (31) de l'organe de guidage (18) chevauchent une zone située entre les vis d'entrée (34, 35) pour diminuer la largeur de l'andain de produits ramassés et pour fournir les produits à l'orifice d'entrée des produits (7).

2. Machine de récolte agricole selon la revendication 1, **caractérisée en ce que** la plage de pivotement de l'organe de guidage (18) est limitée par une patte (20) avec des butées de fin de course (21, 22) s'appuyant contre un élément de tête d'une vis de fixation (24).

3. Machine de récolte agricole comportant un ramasseur (5) pour prendre les produits de récolte déposés sur le champ ou le pré, ayant un tambour de ramassage (9) garni de dents de transfert (11) suivi d'une installation de transfert et/ou de coupe en aval dans le sens de passage des produits et un tasse-foin (10) pour les produits, en forme de cylindre, installé devant et/ou au-dessus du tambour de ramassage (9), en rotation aux extrémités libres de bras de support (14, 15) pivotant par un côté sur les parties latérales de la machine de récolte, et un organe de guidage (18) entre le tasse-foin (10) et l'installation de transfert et/ou de coupe, pour limiter vers le haut le flux de produits de récolte,
**caractérisée en ce que**
l'organe de guidage (18) est articulé de manière mobile par rapport au tasse-foin (10), l'organe de guidage (18) peut pivoter en fonction du mouvement de pivotement du tasse-foin (10) par rapport au tambour de ramassage (9) et le mouvement de pivotement de l'organe de guidage (18) est commandé par un dispositif à bras (28) s'appuyant contre les parties latérales (16, 17) du tambour de ramassage (9).

4. Machine de récolte agricole selon l'une des revendications 1 à 3,
**caractérisée en ce que**
le tasse-foin (10) est réalisé comme cylindre (13) tournant librement ou entraîné.

5. Machine de récolte agricole selon l'une des revendications 1 à 4,
**caractérisée en ce que**
l'organe de guidage (18) en forme de grille en tiges (32), est muni dans sa zone avant adjacente à la traverse (33), d'une tôle anti-rebondissement (36) fermée.

6. Machine de récolte agricole selon l'une des revendications 3 à 5,
**caractérisée en ce que**
le dispositif de bras (28) a la forme d'un quadrangle articulé cinématique.

7. Machine de récolte agricole selon la revendication 6,
**caractérisée en ce que**
le quadrangle articulé constituant le dispositif de bras (28) est formé d'un des bras de support (14, 15), du cylindre (13) et d'une patte (29) associée à l'organe de guidage (18) et d'un bras (30) qui s'appuie contre l'une des parties latérales (16, 17) du tambour de ramassage (9).
